# EUROPEAN PATENT APPLICATION

(11) **EP 2 150 025 A1**
(43) Date of publication of application: **03.02.2010**
(21) Application number: 09162658.0
(22) Date of filing: 15.06.2009
(51) Int. Cl.: H04L 29/06

(54) **IP network communication method having security function, and communication system**

(30) Priority: 29.07.2008 JP 2008194986
(71) Applicant: Fujitsu Limited, Kawasaki-shi, Kanagawa 211-8588 (JP)
(72) Inventor: Hamamura, Tatsuji, Kawasaki-shi, Kanagawa 211-8588 (JP); Fukuda, Kenji, Kawasaki-shi, Kanagawa 211-8588 (JP); Tamura, Yoshio, Kawasaki-shi, Kanagawa 211-8588 (JP); Karino, Ryuichi, Kawasaki-shi, Kanagawa 211-8588 (JP); Hasegawa, Hajime, Kawasaki-shi, Kanagawa 211-8588 (JP)
(74) Representative: Stebbing, Timothy Charles

(57) **Abstract**

An IP network communication system which applies encryption with a reduced processing delay caused by a CPU load which is increased by the application of IPsec etc., and with reduced degradation of data transmission efficiency in a network, is provided. The IP network communication system having a security function includes an encryption processing part (21,26) to encrypt a predetermined area range of one packet to be transmitted, and not to encrypt a residual area of the one packet; and a transmission part to transmit the packet encrypted by the encryption processing part through a tunnel (32) for encryption. The predetermined area range may be obtained by fragmenting the packet and encrypting only one or more of the fragments.

## Description

The present invention relates to an IP network communication method and a communication system, having a security function.

In a mobile communication system, as channels for connecting each network device (radio base station, radio base station controller, switching apparatus, etc.), generally, ATM (Asynchronous Transfer Mode) channels and IP (Internet Protocol) channels are used in many cases.

In the next generation mobile communication systems (LTE: Long Term Evolution, SAE: System Architecture Evolution, ECN: Evolved Core Network, WiMAX, 4G, etc.) which are being studied vigorously today, there are many communication systems in which to define IP networks as the connection channels of network devices is under study.

Accordingly, in the mobile communication systems also, realization as one service connected to a total IP network (Internet Protocol Network) is going to be made.

As such, including the IP communication such as the Internet today, all kinds of communication are moving toward services using a common base of IP.

As services communicated through IP, a variety of types exist, including, for example, a type that requires communication with a small delay (low latency), such as voice and moving images, and a type that requires to transmit a large amount of data at high speed.

In case of communicating a large amount of data, a better transmission efficiency is obtainable if large packets in length (long packet length) on an IP channel are used. However, to transmit large packets, the IP channel must be occupied for a long time. The above occupation time may possibly impede a service in which communication with a small delay is required.

For the above reason, to secure communication quality with a small delay, generally, a large packet is transmitted after being fragmented.

Meanwhile, greater interest is being taken also in communication safety. Service providers desirably take measures on security issues using encrypted communication, considering communication safety in their own services.

Additionally, various studies are being carried out in the direction of adopting IPsec (IP security Protocol) to network channels, regardless of applications on the channels, as a technology that enables automatic encryption throughout communication.

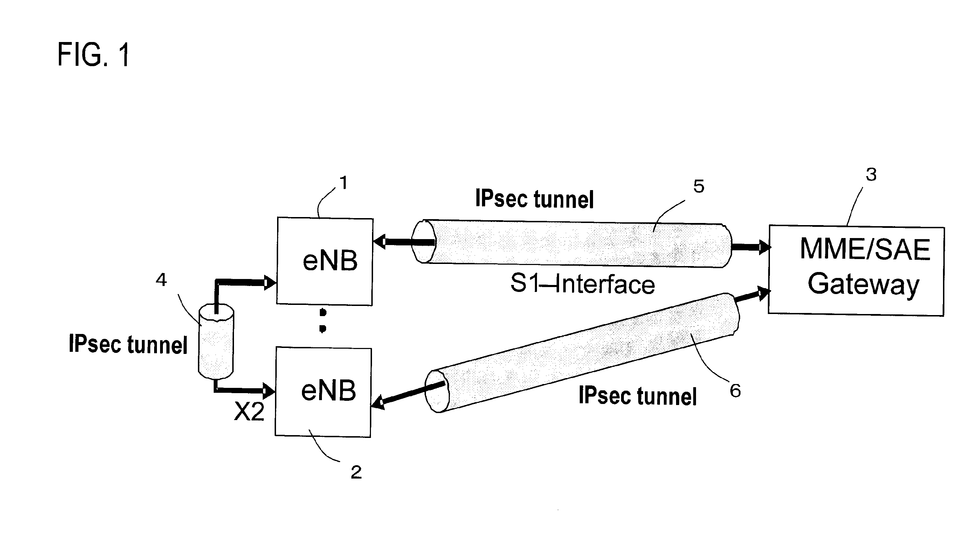

In the following, using an example of an LTE system, FIG. 1 depicts exemplary channels having sections in which IPsec is applicable. In FIG. 1, a section between radio base stations (eNB) 1 and 2, a section between radio base stations 1, 2 and a gateway 3 may be object sections of IPsec, by the use of IPsec tunnels 4, 5 and 6.

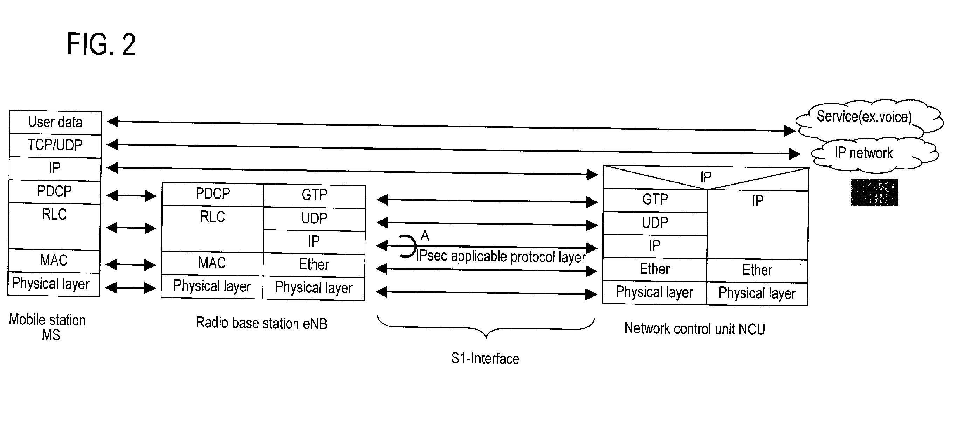

Further, FIG. 2 depicts a layer structure to which IPsec is applicable. In FIG. 2, there are depicted protocol stacks of user plane data among a mobile station MS, a radio base station eNB and a network control unit NCU. In such a protocol stack , between the radio base station eNB and the network control unit NCU, IPsec is applicable (A in FIG. 2).

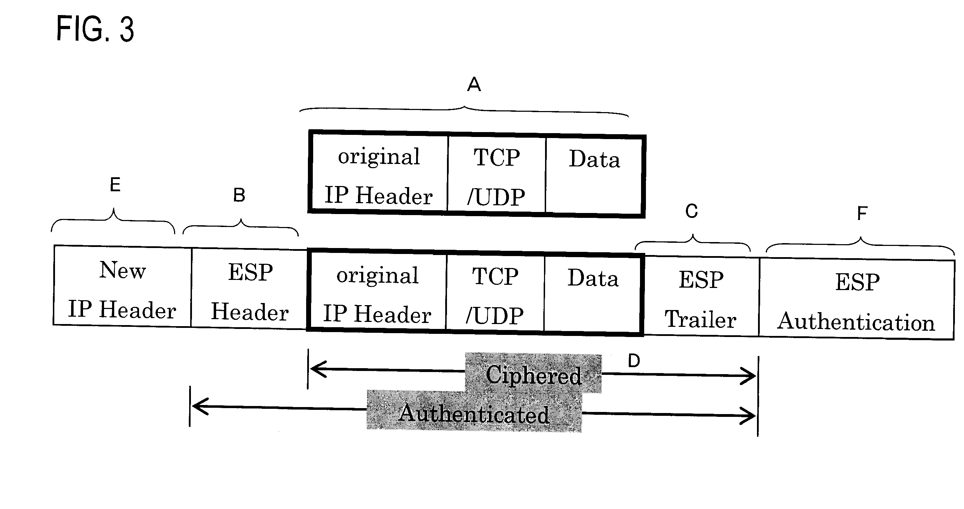

Fig. 3 depicts the IPsec protocol. In FIG. 3, at the time of encryption of an ordinary packet A, there are added an encryption header B and a trailer C, indicative of being in an encrypted state. Then, the range (enlarged packet) including the ordinary packet A and the trailer C is encrypted (D in FIG. 3), and the range including the encryption header B is verified between the transmission side and the reception side.

Further, in order to transmit the encrypted packet through a tunnel for encrypted communication, a new header E and a trailer F are added.

Here, to apply the IPsec technology, it is desirable to periodically exchange a variety of kinds of keys between network apparatuses, and it is preferable to arrange a protocol termination section dedicated for IPsec.

In the above case, there is a risk of greatly damaging the processing capacity of a transmission apparatus itself, which may though be caused by a data layer, to which the technology related to the dedicated IPsec protocol termination is applied, and a target data transmission amount also. In other words use of IPsec impacts processing performance and throughput of useful data.

In general, it is said that, depending on whether or not IPsec is applied (IPsec on/off), the performance of the protocol termination section differs on the order of 30 to 40 percent.

Also, as described in FIG. 3, when IPsec is applied, data capacity is increased by the addition of the header, the trailer (D, B in FIG. 3), etc. for encrypted communication. This causes the reduction of data transmission efficiency.

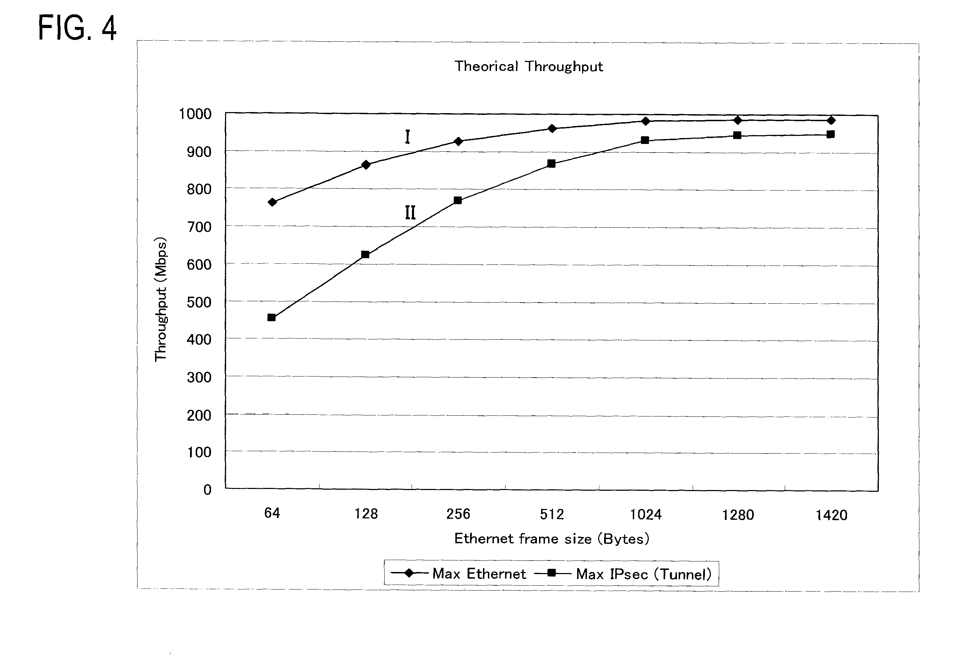

FIG. 4 depicts the data transmission efficiency when IPsec is applied. The horizontal axis indicates the frame size and the vertical axis indicates the throughput. In FIG. 4, "I" represents the transmission efficiency when IPsec is OFF, while "II" represents the transmission efficiency when IPsec is ON.

As depicted in FIG. 4, in both cases of IPsec on/off, varied theoretical values of the data transmission efficiency are decreased as the packets become shorter in length (i.e. frame length becomes shorter). In case of the shortest packet (64 bytes/packet), the throughput is decreased by approximately 40 percent, as compared to the case (I) in which IPsec is not applied.

In the case of a low-latency service, such as voice data, it is desired to limit the packet length to a certain extent. Because a long time is occupied in the network to transmit a long packet, which undesirably makes voice data etc. (having a limited delay) keep waiting, the packet is divided (fragmented) in advance into short packets.

As the prior art, there is a technique of adding, to a packet on which encryption processing is to be made, an identifier that is different from each hash value obtained by using a specific field of a packet header as a hash key, thereby enabling guarantee of sequence and parallel processing (Japanese Laid-Open Patent Publication No. 2000-315997).
However, fragmenting signifies shortening the packet length, which becomes a factor of decreasing the transmission efficiency, as described in regard to FIG. 4.

On the other hand, with the widespread use of high speed Ethernet (registered trademark), there is an increased opportunity of transmitting a large amount of data and private data through the Ethernet (registered trademark), and an efficient data security measure is required.

Accordingly, it is desirable to provide an IP network communication system applying encryption with a reduced processing delay caused by a CPU load which is increased by the application of IPsec etc., and with reduced degradation of data transmission efficiency in a network.

Large capacity communication data in these days include a lot of binary compressed data, such as ZIP, compressed video image data, such as MPEG, and compressed voice data. In most cases, such compressed data include, in each top part (header), information for data restoration. In a state that decryption cannot be performed on the above part after being encrypted, there are many cases that accurate restoration of the above compressed data cannot be performed.

Therefore, instead of applying to an overall packet a security technology such as IPsec required for the network, the security technology is applied only to a portion of the packet in which security is required, in other words to only one or more of a plurality of fragmented packets formed from the original packet, or alternatively to a portion of a single packet.

As one exemplary configuration, an IP network communication system having a security function includes a fragmentation section to fragment transmission data into a plurality of packets, an encryption processing section to encrypt only a portion of packets (one or more packets) among the plurality of fragmented packets and not to encrypt the residual packets (remaining packets), and a transmission means for transmitting the encrypted packets and the non-encrypted packets.
In another exemplary configuration, encryption processing is applied only to part of a single packet.

By this, a processing delay caused by an increased CPU load by the application of IPsec etc. is reduced, and the degradation of the data transmission efficiency in the network is reduced.

The advantages of the invention will be realized and attained by means of the elements and combinations particularly pointed out in the claims.

It is to be understood that both the foregoing general description and the following detailed description are exemplary and explanatory and are not restrictive of the invention, as claimed.

Reference is made, by way of example only, to the accompanying drawings in which:
FIG. 1 illustrates exemplary channels having sections in which IPsec is applicable;
FIG. 2 illustrates a layer structure to which IPsec is applicable;
Fig. 3 illustrates the IPsec protocol;
FIG. 4 illustrates the data transmission efficiency when IPsec is applied;
FIG. 5 is a block diagram illustrating a configuration of an embodiment of an IP network communication system to which IPsec is applicable;
FIG. 6 is a diagram illustrating packet data transmitted from data transmission apparatus 20 depicted in FIG. 5;
FIG. 7 illustrates a sequence for generating both tunnel for encrypted communication and tunnel for encryption control in network;
FIG. 8A is the processing flow in the apparatus A on the transmission side according to the first embodiment;
FIG. 8B is the processing flow in the apparatus B on the reception side according to the first embodiment;
FIG. 9 is a processing flow in the transmission apparatus on the transmission side corresponding to a second embodiment;
FIG. 10 is a block diagram illustrating another exemplary configuration of a transmission apparatus on the transmission side, corresponding to a third embodiment;
FIG. 11A is a diagram illustrating ordinary Ipsec of a packet data;
FIG. 11B illustrates an example where a point positioned halfway of the packet header part is defined to be an encryption start position, and a range having a predetermined IPsec length thereafter is defined to be an encryption area, according to the third embodiment;
FIG. 11C illustrates an example where a predetermined partial area is defined to be an area for encryption, according to the third embodiment, and an area subsequent thereto, having a length including a non-encrypted portion, is defined to be a pattern length for IPsec application, a setting is made so as to repeat the pattern to which IPsec is applicable;
FIG. 12A is a processing flow of the transmission apparatus on the transmission side, according to the third embodiment;
FIG. 12B is a processing flow of the transmission apparatus on the reception side, according to the third embodiment;
FIG. 13 is a processing flow of the transmission apparatus on the transmission side according to a fourth embodiment;
FIG. 14 is a table in which the features of the above each embodiment are compared.

Embodiments will now be described with reference to the accompanying drawings.

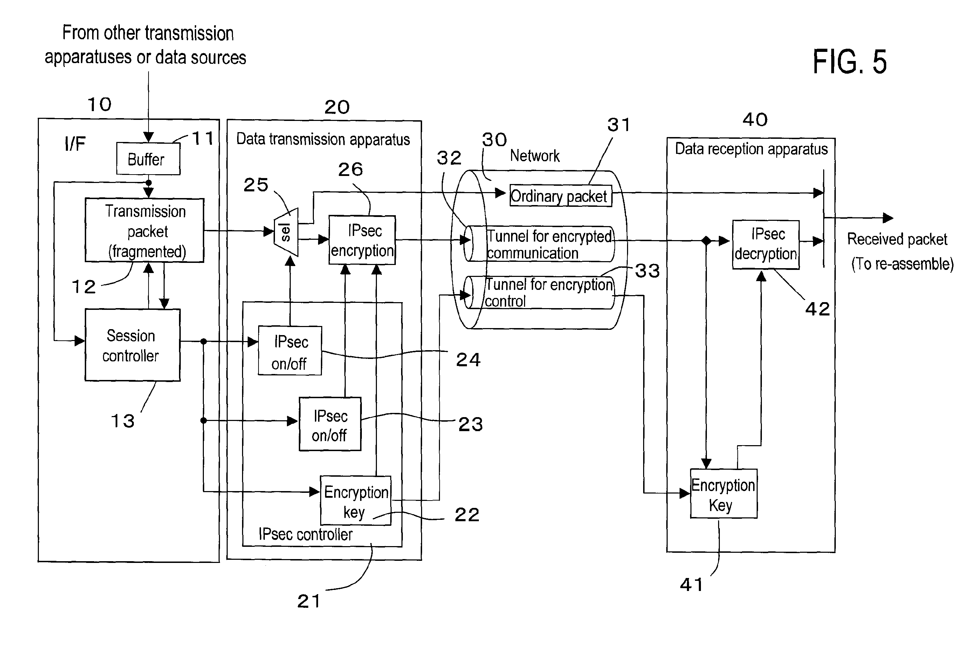

FIG. 5 is a block diagram illustrating a configuration of an embodiment of an IP network communication system to which IPsec is applicable. Because of similar configurations, only the configuration of one-directional communication side out of bidirectional communication is depicted.

In the IP network communication system, a data transmission apparatus 20 on the transmission side and a data reception apparatus 40 on the reception side are connected through a network 30. On the input side of the data transmission apparatus 20 on the transmission side, an input interface 10 is provided.

Network 30 includes a path 31 for packets (ordinary packets) for non-encrypted session. Also, at a communication session time of the encrypted data, there are formed a tunnel 32 for encrypted communication and a tunnel 33 for encryption control, as will be described later.

In FIG. 5, packet data is input to a buffer 11 provided in input interface 10 of data transmission apparatus 20 on the transmission side, from a data source of another transmission apparatus or the same transmission apparatus.

A transmission packet generator 12 fragments the packet data read out from buffer 11 into a plurality of fragmented packets each of a predetermined data length.

In regard to the packet data input to buffer 11, a session controller 13 decides a session and QoS (Quality of Service) for each fragmented packet, based on fragment information fragmented in transmission packet generator 12. On the basis of each session, in case of the fragmented packet not requiring encrypted communication, session controller 13 instructs transmission packet generator 12 and a first IPsec on/off section 24 to perform non-encrypted communication.

By this, transmission packet generator 12 outputs packet data from buffer 11, which are kept intact in the state of being fragmented, so as to input to a selector 25 of data transmission apparatus 20.

Because of receiving the instruction of non-encryption from session controller 13, first IPsec on/off section 24 sets selector 25 in a manner to enable packets to pass through an ordinary packet path 31 in network 30.

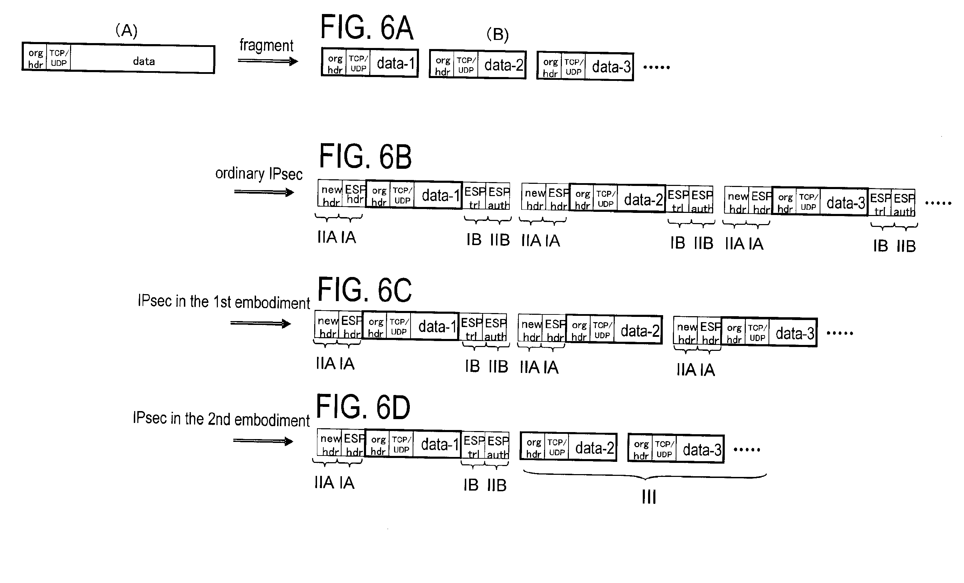

FIG. 6 is a diagram to illustrate packet data transmitted from data transmission apparatus 20 depicted in FIG. 5. In FIG. 6, FIG. 6A depicts a state that a packet data (A) from buffer 11 is fragmented into a plurality of packets (B) by transmission packet generator 12.

FIG. 6B shows exemplary packet data corresponding to the conventional method for encrypting packet data. Based on decision processing by session controller 13, a header (IA) and a trailer (IB) for encryption processing are added to the entire plurality of fragmented packets being output from transmission packet generator 12. Also, a header (IIA) and a trailer (IIB) are added to enable packets to pass through tunnel 32 for encrypted communication.

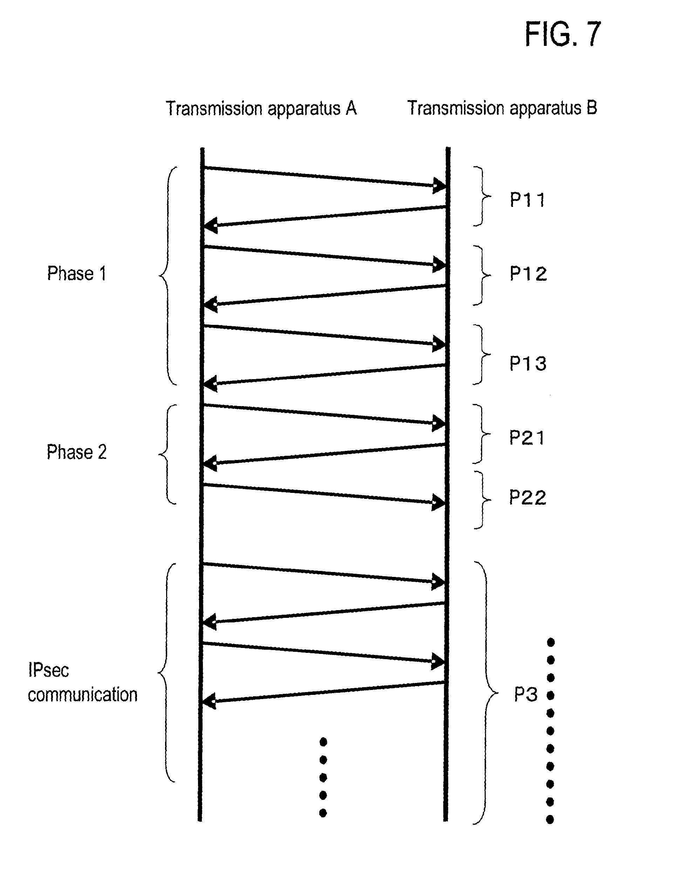

Now, FIG. 7 is explained in regard to a sequence for generating both tunnel 32 for encrypted communication and tunnel 33 for encryption control in network 30.

Namely, in FIG. 7, there are included phase 1 processing and phase 2 processing, prior to IPsec communication.

In the phase 1, in order to form tunnel 33 for encryption control between a transmission apparatus A on the transmission side and a transmission apparatus B on the reception side, an algorithm (such as encryption algorithm and verification algorithm) for use by tunnel 33 for encryption control is determined through path 31 for ordinary packets (processing procedure P11).

Next, in a similar way, through path 31 for ordinary packets, an encryption key of tunnel 33 for encryption control is determined (processing procedure P12), using the algorithm determined in the processing procedure P11. By this, tunnel 33 for encryption control is formed.

Further, in the phase 1, using tunnel 33 for encryption control determined by the processing procedures P11 and P12, verification of the opposite communication party is performed mutually between the transmission apparatus A and the transmission apparatus B (processing procedure P13).

In the phase 2, using tunnel 33 for encryption control generated in the phase 1, an encryption key and algorithm for use by tunnel 32 for encrypted communication between the transmission apparatus A and the transmission apparatus B are determined (processing procedure P21). Further, to the transmission apparatus B, the transmission apparatus A confirms the determined encryption key and the algorithm for use by tunnel 32 for encrypted communication (processing procedure P22).

Thereafter, encrypted communication (IPsec) is performed using the generated tunnel 32 for encrypted communication (processing procedure P3).

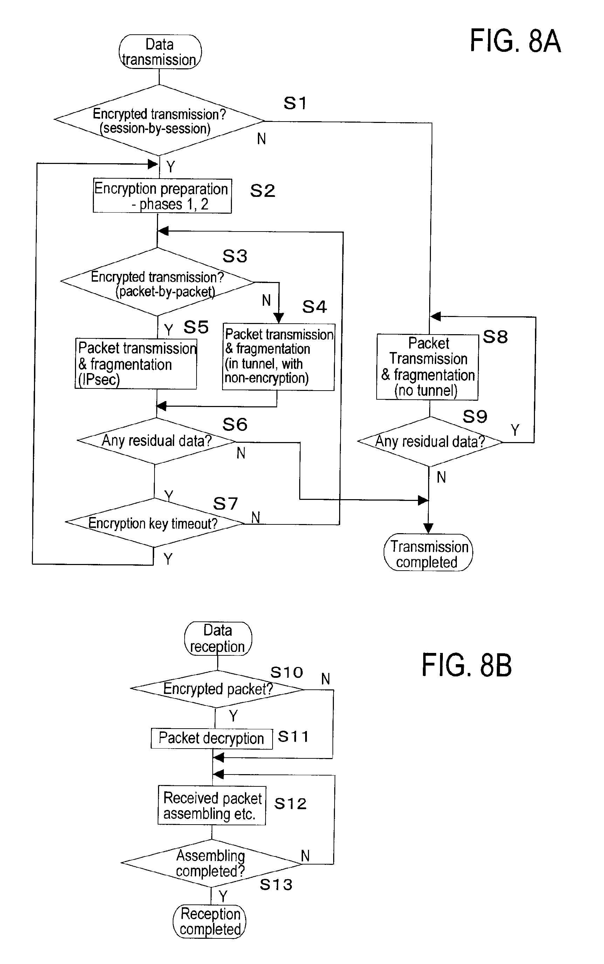

FIGS. 8A, 8B depict the processing flow in the apparatus A on the transmission side (FIG. 8A) and the apparatus B on the reception side (FIG. 8B) according to the first embodiment.

First, based on packet data in buffer 11, session controller 13 decides whether or not to employ encrypted transmission on a session-by-session basis (step S1). In case of not employing encrypted transmission (N in step S1), a packet being output from buffer 11 and fragmented is forwarded to data reception apparatus 40 through ordinary packet transmission path 31. Transmission is continued until the continuation of packet data in buffer 11 is interrupted (steps S8, S9 in FIG. 8A). The packet transmitted at this time is similar to the case depicted in (B) of FIG. 6A.

In step S1, based on the packet data, session controller 13 decides whether or not to use encrypted communication on a session-by-session basis, and in the case of encrypted communication (Y in step S1), as described in FIG. 7, tunnel 32 for encrypted communication and tunnel 33 for encryption control are formed in the phase 1 and the phase 2, as the preparation of encryption (step S2). In apparatus 40 on the reception side, the encryption key having been confirmed between with the apparatus on the transmission side is preserved.

In FIG. 8A, in regard to the plurality of fragmented packets according to the first embodiment, it is decided whether or not each packet is an object of encrypted transmission on a packet-by-packet basis (step S3). Namely, IPsec communication is applied to only a portion of the plurality of packets, for example only to the top (first or head) packet, while the residual (e.g. second, third, etc.) fragmented packets in the one session are transmitted without being encrypted.

For example, in case of encrypting only the top packet, when the object for transmission processing is the top packet (Y in step S3), first IPsec on/off section 24 in an IPsec controller 21 is made to control selector 25 to switch so as to output only the top packet to an IP encryption section 26.

At the same time, an instruction is given to a second IPsec on/off section 23, so that IP encryption section 26 encrypts only the top packet, using the encryption key generated in encryption key generator 22. As such, encryption is performed only for a portion (subset) of the fragmented packets (step S5).

As depicted in FIG. 6C of Fig. 6, according to the first embodiment, the encryption header (IA) and the trailer (IB) are added to the top packet to be encrypted, and further, to the outer side thereof, the header IIA and the trailer (IIB) are added so as to enable passing through tunnel 32 for encrypted communication.

On the other hand, in the first embodiment, because encryption is not required for the packets following the top packet, only the encryption header IA is added. Also, because verification with the apparatus on the reception side is not required, only the header IIA is added so as to enable passing through tunnel 32 for encrypted communication (step S4). The trailer for encryption (IB) and the trailer for verification (IIB) are not added.

Thereafter, those of the packets which have been encrypted (for example, the top packet), and other fragmented packets, are transmitted to the tunnel for encrypted communication until no more data exists in buffer 11 (steps S6, S7).

Here, in order to increase encryption strength, an effective time is set in the encryption key. When the effective time in the encryption key is timed out (Y in step S5), the procedure returns to step S2, and the encryption preparation processing is performed again, so that the subsequent processing is continued.

FIG. 8B is a processing flow in the apparatus on the reception side, corresponding to the processing flow in the apparatus on the transmission side depicted in FIG. 8A. Explanation is given by reference to FIG. 5.

Data reception apparatus 40 receives packets via path 31 for ordinary packets, tunnel 32 for encrypted communication, and tunnel 33 for encryption control, respectively.

In IPsec decryption section 42, in regard to each packet received from tunnel 32 for encrypted communication, it is decided, by the presence or absence of the encryption header, whether or not the received packet is an encrypted packet, (step S10).

Further, data reception apparatus 40 retains the encryption key, which has been agreed with the apparatus on the transmission side prior to the encrypted communication, in an encryption key generator 41 for decryption.

In FIG. 5, based on the packet header information received from tunnel 32 for encrypted communication and the encryption key retained in encryption key generator 41 for decryption, encryption key generator 41 for decryption generates an encryption key for decryption. Then, using the generated encryption key for decryption, the encrypted packet is decrypted in IPsec decryption section 42 (step S11).

As such, in IPsec decryption section 42, the encrypted packet is decrypted, while the non-encrypted packet remains intact, and then, the packets are input to an assembling circuit not depicted in FIG. 5. Then, because the received and decrypted packets have been fragmented, reassembly is performed in the assembling circuit, and thus, the original packet data can be obtained on the reception apparatus side.

In the above first embodiment, among the plurality of packets of the fragmented data, IPsec is applied only to the top (first) packet, while the residual packets are transmitted without using IPsec, through the tunnel for encrypted communication. Thus, a data range (bit length) to which encryption is applied can be reduced.

Accordingly, because the entire data are not exposed to the communication network, security is ensured, and further, because ESP header (IA) etc. can be omitted at the time of encryption being switched off, it is possible to cut both the network load and the processing required for encryption.

As a consequence, the CPU load can be reduced, and communication with a small delay can be attained. Here, according to the present embodiment, application and non-application of encryption can be decided on a packet-by-packet basis on the reception apparatus side, using the ESP header (IA) of IPsec. Therefore, any special functional addition is not necessary.

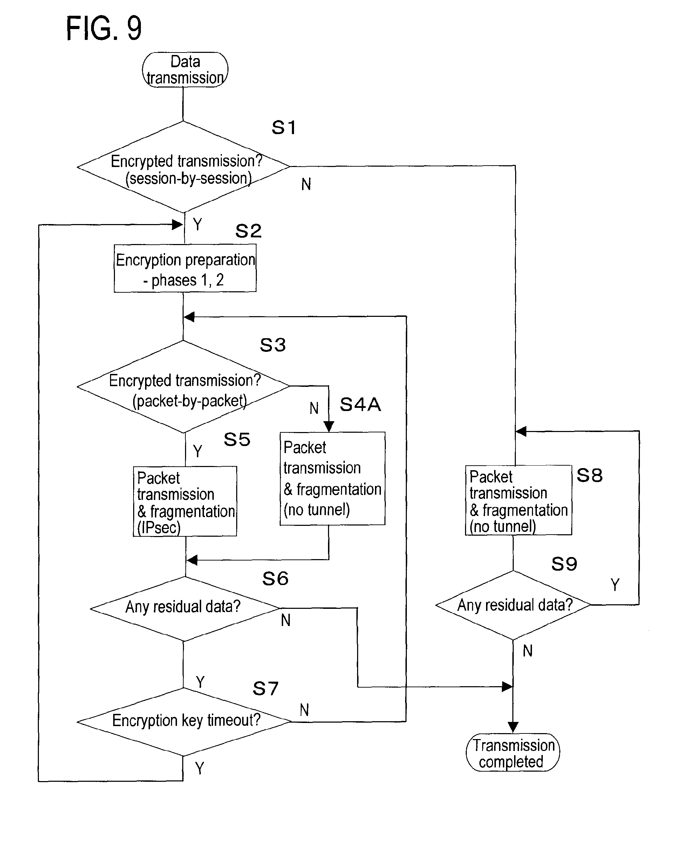

FIG. 9 is a processing flow in the transmission apparatus on the transmission side corresponding to a second embodiment.

In the present embodiment, similar to the foregoing first embodiment, only a portion (one or more) of fragmented packets, for example the top packet, is encrypted. In order that the fragmented packets thereafter are passed through ordinary packet path 31 without being encrypted, session controller 13 instructs first IPsec on/off circuit 24 to control to switch selector 25.

Accordingly, FIG. 6D of Fig. 6 illustrates packet data in the second embodiment, and the encryption header (IA) and the trailer (IB) are added to the top packet, and further, the header (IIA) and the trailer (IIB) are added to enable passing through tunnel 32 for encrypted communication.

The packets thereafter are kept in a state of being fragmented, and transmitted through ordinary packet path 31.

Therefore, by the comparison with the processing flow depicted in FIG. 8 corresponding to the first embodiment, a difference lies only in a point that the processing of step S4 is replaced by a step S4A.

Namely, except for the top (first) packet, in case of the decision of not being an encrypted transmission packet (N in step S3), the packet is transmitted through ordinary packet path 31 in a state of the fragmented packet (III in FIG. 6D). Other processing is similar to the first embodiment.

According to the above second embodiment, as described above, in an identical session, a packet having IPsec ON is transmitted using tunnel 32 for encrypted communication, while a packet having IPsec OFF is transmitted through ordinary packet path 31 as an ordinary packet, withoutusingthetunnel.Inconsequence, according to the present embodiment, in regard to the packets in case of IPsec OFF, the header etc. for the transmission by tunnel 32 for encrypted communication can be omitted from the packets in the first case of encryption OFF. As compared with the first embodiment, the network load and the CPU load can be reduced further.

In addition, to execute the present embodiment, no addition of a special function is necessary on the data reception apparatus side, similarly to the first embodiment.

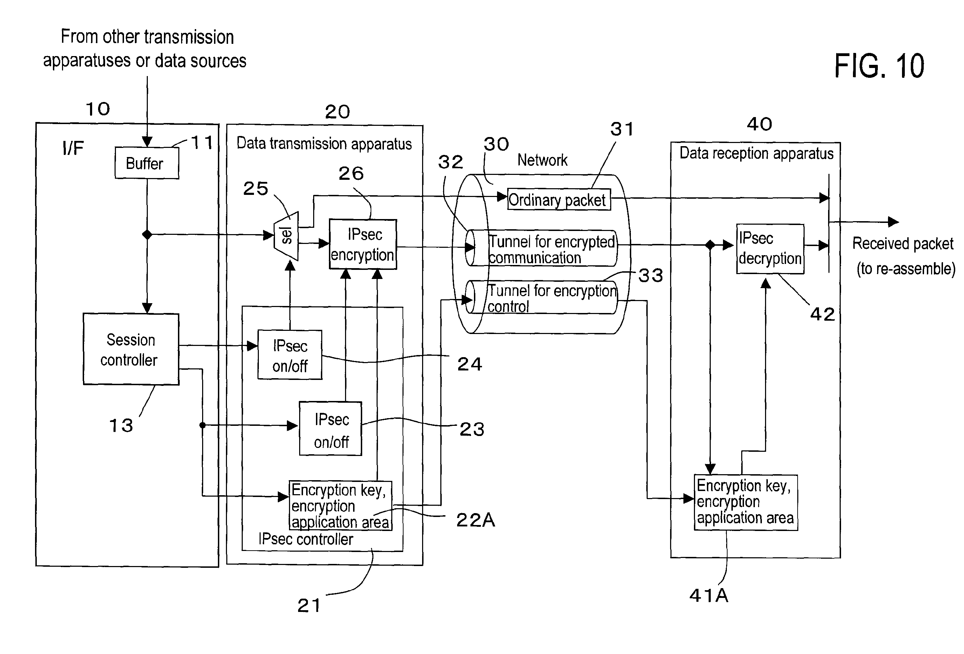

FIG. 10 is a block diagram illustrating another exemplary configuration of a transmission apparatus on the transmission side, corresponding to a third embodiment.

According to the present embodiment, transmission packet generator 12 for fragmenting packets is not provided in input interface 10 of transmission apparatus 20.

In regard to transmission packets read out from the buffer, session controller 13 specifies a portion (section) of the transmission packets (one transmission packet) as an application range of IPsec. The above IPsec application range is determined to correspond to preset conditions based on information such as session information and QoS.

Namely, in synchronization with packets being input from buffer 11 to data transmission apparatus 20, session controller 13 notifies an encryption key generator 22A in IPsec controller 21 of the encryption application range.

According to an encryption instruction at timing corresponding to the encryption application range from encryption key generator 22A, IPsec encryption section 26 performs encryption, so as to transmit the encrypted portion in one packet and the residual portion of the packet concerned to transmission apparatus 40 on the reception side, through tunnel 32 for encrypted communication.

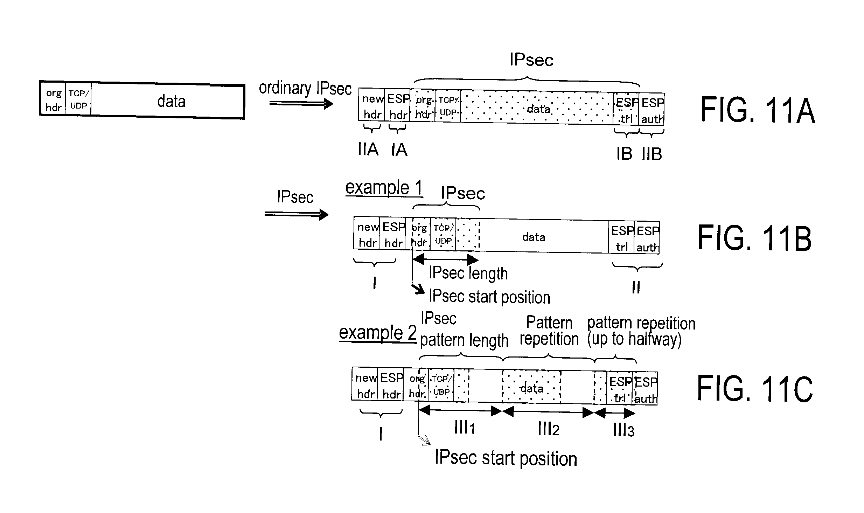

FIGS. 11A through 11C are diagrams illustrating exemplary encrypted packets corresponding to the third embodiment.

FIG. 11A is a diagram illustrating ordinary IPsec, in which an IPsec application range is defined by a range between a packet to be transmitted and the trailer IB for encryption added to the packet. In contrast, as depicted in FIGS. 11B and 11C, according to the third embodiment, an encryption object is defined by an arbitrary range in one packet to be transmitted. In other words, instead of fragmenting one packet and encrypting or not encrypting each fragment, this embodiment applies encryption over only part of the range of a single packet.

Specifically, in the example depicted in FIG. 11B, a point positioned halfway of the packet header part is defined to be an encryption start position, and a range having a predetermined IPsec length thereafter is defined to be an encryption area. Further, in the example depicted in FIG. 11C, by defining a predetermined partial area to be an area for encryption, and by defining an area subsequent thereto, having a length including a non-encrypted portion, to be a pattern length for IPsec application, a setting is made so as to repeat the above pattern (III1, 1112 and III3 in FIG. 11C). Additionally, as to the last pattern area, there is a case that the pattern length is ended halfway. FIG. 11C represents such a case.

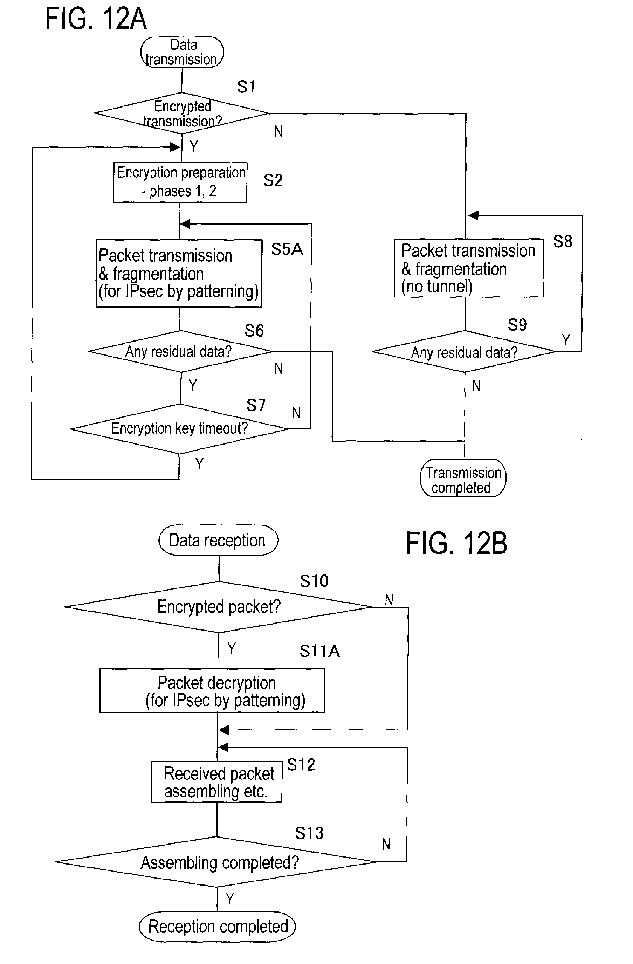

FIGS. 12A and 12B depict the processing flow of the transmission apparatus on the transmission side (FIG. 12A) and the transmission apparatus (FIG. 12B) on the reception side.

In comparison with the processing flow according to the first embodiment depicted in FIG. 8A and FIG. 8B, without the decision of applicability of encrypted transmission on a packet-by-packet basis (step S3 in FIG. 8A), encryption processing is executed by session controller 13 for a preset IPsec application range in regard to the packets to be transmitted (step S5A). Other processing is similar to the processing flow in the foregoing embodiments.

In the processing flow of the transmission apparatus on the reception side depicted in FIG. 12B, on deciding to be an encrypted packet (Y in step S10), IPsec decryption section 42 decrypts the encrypted area in the encrypted packet, based on the header part information (step S11A). Other processing is similar to the forgoing embodiments.

According to the present third embodiment, as having been explained in the above FIG. 10 and FIGS. 11A-11C, in the transmission apparatus on the data transmission side and the transmission apparatus on the data reception side performing communication with IPsec, the present embodiment is realized by that: a) at the time of exchanging the encryption key, on both the data transmission and reception sides, there is shared information, such as the IPsec application range, indicating, for example, IPsec is to be executed on the data between a start byte position from the top and an end byte position, and an encryption pattern (to encrypt in patches by a pattern) ; b) according to the above information, IPsec is executed only on the restricted data area; and c) according to the above information, the data in the restricted area on which IPsec has been executed is restored.

Further, although there is no change in the basis of the processing phases 1, 2 for encryption preparation described in FIG. 7, the encryption pattern is added to the data to be handled in the phase 2.

Further, as the present embodiment, it has been described that, in interface 10 of the transmission apparatus on the transmission side depicted in FIG. 10, the IPsec application range in the non-fragmented packet is set without the provision of transmission packet generator 12. However, it is also possible to apply the IPsec application area partially in each fragmented packet, needless to say. By the present embodiment, as compared with the conventional method, IPsec communication with a reduced CPU load can be obtained.

Here, as having been described in the above, in the first and second embodiments, it is possible to switch the embodiment methods in the middle of the session because of the control on a packet-by-packet basis. Accordingly, as a still further embodiment, in consideration of the respective characteristics in the aforementioned embodiments, it is possible to optimize a network state by switching each embodiment method according to network congestion condition, CPU use rate, session QoS, etc.

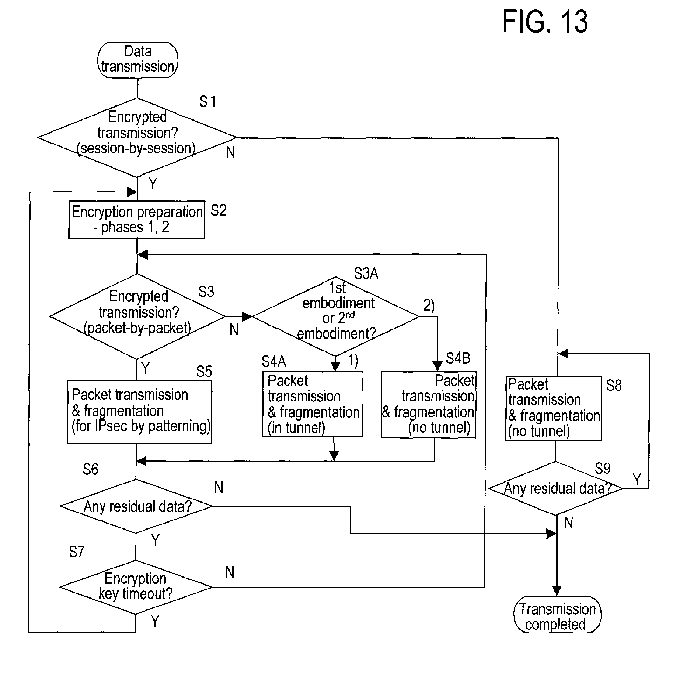

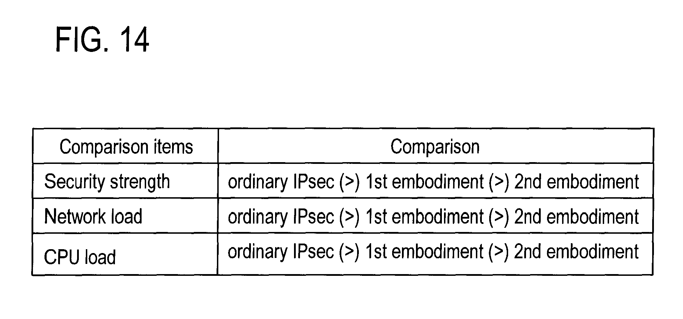

FIG. 13 is the processing flow of the transmission apparatus on the transmission side according to such another embodiment, as a fourth embodiment. FIG. 14 is a table in which the features of the above each embodiment are compared.

In FIG. 14, for example, in regard to the strength of security, the ordinary IPsec system conventionally in use is strongest of all, followed by the first embodiment and the second embodiment in that order. Also, in regard to the network load and the CPU load, each load is the lightest in the second embodiment, and becomes heavier in the order of the first embodiment and the usual IPsec. Additionally, when the security strength is low, improvement can be attained by shortening an update frequency of the encryption key, which is however a tradeoff with the network load and the CPU load.

In the processing flow depicted in FIG. 13, it is decided whether or not encrypted transmission is to be performed on a packet-by-packet basis, namely whether or not encryption is to be made to fragmented packets (step S3). In case of not being encryption on a packet-by-packet basis (N in step S3), in consideration of the features depicted by the table in FIG. 14, to the fragmented packets after the top packet, it is decided which of the first embodiment and the second embodiment fit to network application conditions etc. is to be applied (step S3A), and processing corresponding to the decision is executed (step S4A or S4B).
In FIG. 13, processing in other steps is similar to the embodiment described earlier.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a depicting of the superiority and inferiority of the invention. Although the embodiment(s) of the present inventions have been described in detail, it should be understood that the various changes, substitutions, and alterations could be made hereto without departing from the scope of the claims.

## Claims

1. An IP network communication method having a security function, **characterized by**:
in an encryption processing step(21,26), encrypting a predetermined area range of one packet to be transmitted, while non-encrypting a residual area (IP sec) of the one packet; and
transmitting the one packet encrypted in the encryption processing step (21, 26) through a tunnel (32) for encryption.

2. The IP network communication method according to claim 1, further comprising:
in a fragmentation step(12), fragmenting a transmission data into a plurality of packets,
wherein the one packet to be transmitted is one of the plurality of packets fragmented in the fragmentation step(12).

3. The IP network communication method according to claim 2,
wherein the predetermined area range of the one packet to be encrypted is a top packet of the plurality of packets fragmented in the fragmentation step(12).

4. The IP network communication method according to claim 2 or 3,
wherein the non-encrypted packet of the plurality of fragmented packets is transmitted through the tunnel (32) for encryption being identical for the encrypted packet.

5. The IP network communication method according to claim 1,
wherein the one packet being encrypted is transmitted through the tunnel (32) for encryption, while the non-encrypted packets are transmitted through a path (31) for ordinary packets.

6. An IP network communication system having a security function, comprising:
an encryption processing part(21) to encrypt a predetermined area range of one packet to be transmitted, and not to encrypt a residual area (IP sec) of the one packet; and
a transmission part(20) to transmit the packet encrypted by the encryption processing part(21) through a tunnel(32) for encryption.

7. The IP network communication system according to claim 6, further comprising:
a fragmentationpart (12) to fragment transmission data into a plurality of packets,
wherein the one packet is one of the plurality of packets fragmented by the fragmentation part(12).

8. The IP network communication system according to claim 7, wherein the predetermined area range of the one packet to be encrypted is a top packet of the plurality of packets fragmented in the fragmentation part(12).

9. The IP network communication method according to claim 7 or 8,
wherein the non-encrypted packet of the plurality of fragmented packets is transmitted through the tunnel (32) for encryption being identical for the encrypted packet.

10. The IP network communication method according to claim 6,
wherein the one packet being encrypted is transmitted through the tunnel(32)for encryption, while the non-encrypted packets are transmitted through a path (30) for ordinary packets.
